# EUROPEAN PATENT APPLICATION

(11) **EP 2 498 529 A1**
(43) Date of publication of application: **12.09.2012**
(21) Application number: 11290118.6
(22) Date of filing: 08.03.2011
(51) Int. Cl.: H04W 12/06, H04L 29/06, H04W 4/00

(54) **User authentication method for accessing an online service**

(71) Applicant: Trusted Logic Mobility SAS, 92190 Meudon (FR)
(72) Inventor: Vetillard, Eric, 92190 Meudon (FR)

(57) **Abstract**

The invention relates to a user authentication method for accessing an online service provided by a service provider, the user having a communication terminal (1) including a trusted execution environment (100) having dedicated user authentication means (101), said trusted execution environment storing an authentication policy (103) associated to said service and storing user authentication credentials (104) for said service, the method comprising the steps of:
-during a user access to said service, the trusted execution environment retrieves the authentication policy associated to said service and executes its dedicated user authentication means based on the retrieved authentication policy;
-upon a successful authentication by the dedicated authentication means (102), the trusted execution environment (100) provides the user authentication credentials for said online service to said service provider.

## Description

The present invention generally relates to the access by users to remote services, and more particularly to the user authentication management for an access to such remote services provided by service providers.

Remote services are managed by remote servers accessible through computer networks. A wide variety of services is available to users, including notably access to a social network, access to bank servers, access to messaging services. Since the service provider may store sensitive personal information or may perform sensitive user transactions, the service provider performs a user authentication before the user can access his service account. Therefore, the service providers manage and check user credentials. Service providers therefore store authentication credentials and run authentication processes.

The service providers potentially have to perform regular authentications or have to perform specific authentications for given services, for instance when a user requests a remittance from his bank account. The service providers may have to propose different levels of security to users, which involves a complex management of the authentication according to the user requirements. Moreover, the service providers are responsible for the security of the authentication process.

For the user, the authentication processes by each service provider can also be cumbersome. For instance, mobile phones now provide simpler user interfaces. However, the user does not fully benefit from the simplicity of use of such interface, since he may be requested to sequentially authenticate by various service providers, each service provider having its own authentication process. The user also has to manage credentials for each service he intends to access.

There is thus a need for a solution that overcomes one or several of these drawbacks. The invention therefore relates to a user authentication method for accessing an online service provided by a service provider, the user having a communication terminal including a trusted execution environment having dedicated user authentication means, said trusted execution environment storing an authentication policy associated to said service and storing user authentication credentials for said service, the method comprising the steps of:
- during a user access to said service, the trusted execution environment retrieves the authentication policy associated to said service and executes its dedicated user authentication means based on the retrieved authentication policy;
- upon a successful authentication by the dedicated authentication means, the trusted execution environment provides the user authentication credentials for said online service to said service provider.

In an embodiment, the method comprises initial configuration steps wherein:
- the trusted execution environment processes a standard authentication policy sent by the service provider;
- the trusted execution environment requests the user to configure his authentication policy for said online service;
- the trusted execution environment records the configured authentication policy if this configured authentication policy is stricter than the standard authentication policy.

In another embodiment, an initial configuration step includies the storage of said user authentication credentials for the online service in the trusted execution environment.

In a further embodiment, said online service is accessed through an internet browser executed on a user terminal communicating with said communication terminal, said internet browser including a plug-in forwarding an authentication request sent by the service server to said communication terminal.

In an additional embodiment, the execution of the dedicated authentication means includes at least one authentication process including requesting the user to input a password, and/or proceeding to a biometric authentication and/or determining the location of said communication terminal.

The invention also relates to a user communication terminal, including a trusted execution environment having dedicated user authentication means, said trusted execution environment storing an authentication policy associated to at least an online service and storing user authentication credentials for accessing said online service, the trusted execution environment being programmed for retrieving the authentication policy associated to said service and for executing its dedicated authentication means based on the retrieved authentication policy, the trusted execution environment being also programmed to output said user authentication credentials when the dedicated authentication means have performed a successful authentication.

The advantage of the present invention will become apparent from the following description of several embodiments with reference to the accompanying drawings, in which :
- Figure 1 is a schematic view of a first embodiment of a system performing a method according to the invention;
- Figure 2 is a schematic view of an example of mobile terminal used in the system of figure 1;
- Figure 3 illustrates the steps carried out according to the first embodiment during an access to the online service;
- Figure 4 is a schematic view of a second embodiment of a system performing a method according to the invention;

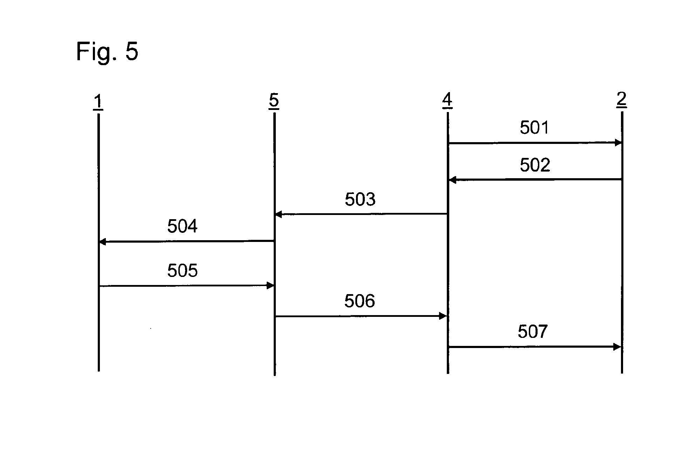

- Figure 5 illustrates the steps carried out according to the second embodiment.

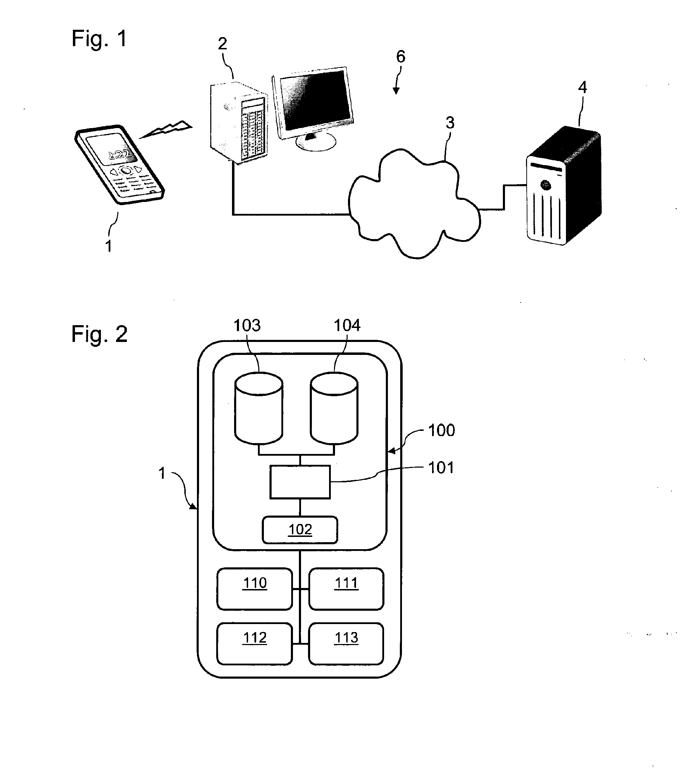

Figure 1 is a schematic view of an example of system 6 adapted to perform an authentication method according to the invention. The system 6 includes a mobile communication terminal 1, a user computer terminal 2, a remote access network 3 and a remote or online service provider server 4.

The mobile terminal 1 and the computer terminal 2 are configured to communicate using for instance wireless communication interfaces. The communication between the mobile terminal 1 and the computer terminal 2 can be secured according to the usual practice of someone ordinary skilled in the art. The communication between the computer terminal 2 and the remote service provider server 4 can be established through an internet access. The service provider server 4 proposes one or more services like access to a social network, bank transactions or messaging services.

The service provider server 4 may store sensitive personal information or may perform sensitive user transactions. Therefore, the service provider server 4 manages one account for each user. An authentication is therefore made mandatory to access the server 4. This authentication is based on user credentials like a user ID and a password associated to the service user account. A given user can therefore only access his own account and other users are prevented from accessing his account.

In the example illustrated, when an authentication to the service provider server 4 is requested during a user access to a service, the computer terminal 2 delegates the user credential collection to the mobile communication terminal 1. The mobile communication terminal 1 therefore includes a trusted execution environment having dedicated authentication means. The trusted execution environment stores an authentication policy associated to the service provided by server 4 and stores the user authentication credentials for said service as well.

During a user access to the service, the trusted execution environment of the mobile terminal 1 retrieves the authentication policy associated to the requested service and executes its dedicated user authentication means based on the retrieved authentication policy. Once the dedicated authentication means have been successfully performed, the trusted execution environment provides the user authentication credentials to the service provider server 4, through the computer terminal 2.

Such a user authentication method to the online service according to the invention allows the server 4 to delegate a possibly complicated burden of managing complex authentication policies. The management of the user configured authentication policies for access to a given online service can therefore be facilitated. Moreover, the user can access various services, each requesting the use of specific user credentials, by simply authenticating on his mobile terminal 1. For instance, the user will only be requested to memorize credentials of the dedicated user authentication means in order to authenticate to his various online services accounts.

The functions and operations of the communication terminal 1 are defined by both hardware and software. Hardware represents the physical components that carry out the functions, and software represents the collection of all programming instructions, procedures, rules, routines, modules, programs, data, and the like that define how to carry out the terminal's functions and operations.

Manufacturers of communication terminals intended for specific system applications are often concerned about the security of at least some of its data and functions. Thus, some system applications may employ security-sensitive cryptographic circuits so that security policies may be implemented with respect to data handled by the terminal. Some system applications may employ other security-sensitive circuits, such as RF transmitters whose use is tightly controlled for regulatory and network efficiency purposes, and security policies may be implemented so that the security-sensitive circuits are not misused. The trusted execution environment notably allows trusted software to have control of the CPU of the terminal. In this trusted execution environment, access is allowed to security sensitive resources.

The mobile communication terminal 1 includes a trusted execution environment 100. In the trusted execution environment 100, data integrity is assured by any of a variety of hardware, software, firmware, and/or physical access techniques known to those skilled in the art of providing security for computing devices. The trusted execution environment 100 includes a database 103 storing authentication policies associated to various online services. The trusted environment 100 also includes a database 104 storing user credentials used for authenticating the user of the communication terminal 1 when accessing respective online services. The trusted execution environment 100 comprises an input/output interface 102 for data exchanges with the execution environment outside of the trusted execution environment 100.

The trusted execution environment 100 further comprises a trusted execution environment management module 101. The management module 101 notably comprises authentication means dedicated to the trusted execution environment. The management module 101 is notably intended to authenticate the user using the dedicated authentication means to access the database 103 or the database 104. The management module 101 may rely on various authentication means to perform the dedicated authentication. The trusted environment 100 notably comprises an input/output interface 102 for retrieving authentication data. The mobile terminal 1 notably comprises:
- a keyboard 110 (or a tactile display) for inputting a user ID and a password to authenticate and access the trusted execution environment 100;
- a biometric reader 111 (for instance a fingerprint reader or an eye recognition system);
- a global positioning system 112 for determining the location of terminal 1 and possibly derive the context of the access to the service;
- a smartcard reader 113.

The trusted execution environment can thereby perform various kinds of dedicated authentication means based on things the user knows (passwords in any kind of form, pattern recognition...), on things the user is (biometric data), on things the user has (the mobile terminal 1, a smartcard...) or on things the user does (its location, his movements or his closeness from external items like the terminal 2).

Data integrity is assured for databases 103 and 104 by any of a variety of hardware, software, firmware, and/or physical access techniques known to those skilled in the art of providing security for computing devices. The management module 101 therefore prevents a fraudulent modification of the authentication policies or a fraudulent access to the various user credentials.

During a configuration stage, the user may access the service provider server 4 using his terminal 2. The user creates a personal account on the service provider server 4, and will for instance define or obtain service authentication credentials like a login and a password. The defined service authentication credentials are stored in a database of the server 4 and are associated to the user personal account.

The server 4 may propose several security options to the user, for instance a ciphering configuration. The server 4 then sends a standard authentication policy to the terminal 2 corresponding to the user's choice, this standard authentication policy reciting the minimum security requirements for performing a remote delegated authentication. The standard authentication policy may for instance define a minimum frequency of authentication or a maximum distance between the mobile terminal 1 and a definite location. The server 4 may for instance propose different levels or kinds of standard authentication policies to the user, before the user is provided with a chosen standard authentication policy.

Before the server 4 validates the user personal account and the chosen authentication policy, the server 4 may request the user to authenticate using his mobile terminal 1 according to techniques commonly known by someone skilled in the art. The trusted execution environment may include means to digitally sign incoming requests. Server 4 can send a signed request and the trusted execution environment can answer sending an authenticated response.

The standard authentication policy proposed by server 4 corresponds to the minimal authentication requirements of server 4. Based on this standard authentication policy, the user can configure an own standard authentication policy with more secure settings. For instance, the user may select a frequency of authentication higher than in the standard authentication policy, set location requirements for given transactions even if not requested by server 4, request the use of longer ciphering keys, or require a biometric authentication for given transactions even if not requested by server 4. Thus, the user may define a custom authentication policy stricter than proposed by the server 4 for the online service.

Then, the trusted execution environment 100 stores the chosen authentication policy configuration for the service in database 103. Additionally, the trusted execution environment 100 stores the service authentication credentials in database 104.

The computer terminal 2 can store an internet browser plug-in. This plug-in will add the online service to a list of online services for which authentication can be delegated to the mobile terminal 1.

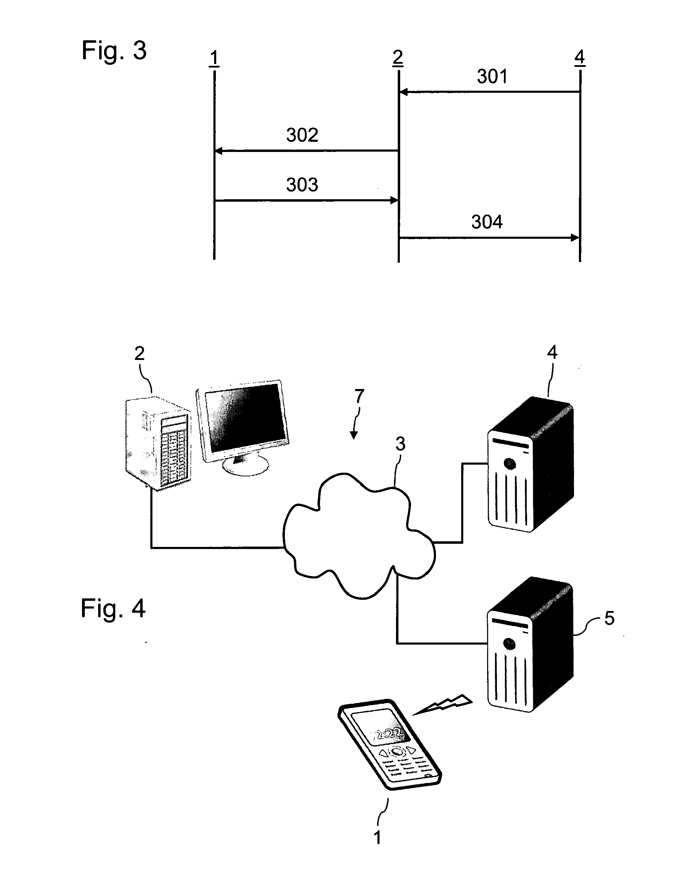

Figure 3 illustrates the steps performed in the system 6 during a user access to the online service. These steps can be carried out either when the user initiates an access to the online service, or while he already uses the online service after a previous authentication.

At step 301, the server 4 sends an authentication request to the computer terminal 2, for instance an Internet page including a form to be filled in with the user online service authentication credentials.

At step 302, the internet browser plug-in of computer terminal 2 checks if the online service proposed by server 4 is present in the list of online services for which authentication can be delegated to the mobile phone 1. Once the plug-in has identified the online service in the list, the computer terminal 2 sends an authentication request for this service to the mobile terminal 1. The request may include parameters concerning the required level of security requested for this authentication.

At step 303, the trusted execution environment 100 receives the request of authentication by the service along with the requested authentication security level. The management module 101 retrieves the corresponding authentication policy from database 103. The management module 101 executes the retrieved authentication policy based on the requested security level. According to the security level and to the configuration saved in the authentication policy, the management module 101 may for instance request the user to input authentication credentials associated to the trusted execution environment, rely on a previous input of these authentication credentials (to benefit from a single sign-on process) or request the user to proceed to a biometric authentication step. Once the management module 101 has successfully executed the authentication policy, it retrieves the service authentication credentials from database 104. The mobile terminal 1 then sends the retrieved service authentication credentials to the computer terminal 2.

At step 304, the plug-in of the computer terminal 2 inputs the received authentication credentials in the authentication form and thus sends the corresponding information to the server 4. Server 4 then performs the authentication based on this information.

According to this method, the authentication is delegated to the trusted execution environment 100, the authentication being based on the management module 101 and its dedicated authentication means.

The authentication processes performed by server 4 may depend on the type of service or depend on the context. Server 4 may request an authentication request if it detects a user access after a period of inactivity. Such a request may be associated with a security level necessitating a strong authentication. Server 4 may also systematically send an authentication request if a money transaction transfer is requested by user. Such a request may be associated with a security level necessitating a strong authentication as well as a definite user location, such as a maximal distance from a previously declared home location.

Figure 4 is a schematic view of an example of system 7 adapted to perform another authentication method according to the invention. The system 7 includes a mobile communication terminal 1, a user computer terminal 2, a remote access network 3, a remote or online service provider server 4 and an authentication management server 5.

The mobile terminal 1 and the authentication management server 5 are configured to communicate using for instance a mobile phone communication network. The communication between the mobile terminal 1 and the authentication management server 5 can be secured according to the usual practice of someone ordinary skilled in the art. The computer terminal 2, the server 4 and the server 5 may communicate through the remote access network 3.

At step 501, the server 4 sends an authentication request to the computer terminal 2, for instance an Internet page including a form to be filled in with the user online service authentication credentials. The server 4 proposes the authentication option of having the user authenticate using the authentication management server 5 and a terminal including a trusted execution environement. Server 5 may be common to numerous services and may be dedicated to perform delegated authentications.

At step 502, the user sends an answer to server 4 through computer terminal 2. The answer requests an authentication using the authentication management server 5 and the mobile terminal 1.

At step 503, the server 4 forwards this request to the authentication management sever 5 along with a security level requirement.

At step 504, server 5 sends an authentication request to the mobile terminal 1, along with a security level requirement.

At step 505, the trusted execution environment 100 of the mobile terminal 1 receives the authentication request for the requested service, along with the requested authentication security level. The management module 101 retrieves the corresponding authentication policy from database 103. The management module 101 executes the retrieved authentication policy based on the requested security level. According to the security level and to the configuration saved in the authentication policy, the management module 101 may for instance request the user to input authentication credentials associated to the trusted execution environment. Once the management module 101 has successfully executed the authentication policy, it retrieves the service authentication credentials from database 104. The mobile terminal 1 either sends the retrieved service authentication credentials to the server 5, or sends a proof of this successful authentication.

At step 506, the server 5 checks the received service authentication credentials or authentication proof.

At step 507, the server 5 has determined that the authentication proof or the service authentication credentials are correct. The server 5 then sends the authentication to the server 4. The access to the online service through the computer terminal 1 is therefore authorized.

## Claims

1. User authentication method for accessing an online service provided by a service provider, the user having a communication terminal (1) including a trusted execution environment (100) having dedicated user authentication means (101), said trusted execution environment storing an authentication policy (103) associated to said service and storing user authentication credentials (104) for said service, the method comprising the steps of:
- during a user access to said service, the trusted execution environment retrieves the authentication policy associated to said service and executes its dedicated user authentication means based on the retrieved authentication policy;
- upon a successful authentication by the dedicated authentication means (102), the trusted execution environment (100) provides the user authentication credentials for said online service to said service provider.

2. User authentication method according to claim 1, comprising initial configuration steps including:
- the trusted execution environment processes a standard authentication policy sent by the service provider;
- the trusted execution environment requests the user to configure his authentication policy for said online service;
- the trusted execution environment records the configured authentication policy if this configured authentication policy is stricter than the standard authentication policy.

3. User authentication method according to claim 1, comprising an initial configuration step including the storage of said user authentication credentials for the online service in the trusted execution environment.

4. User authentication method according to claim 1, wherein said online service is accessed through an internet browser executed on a user terminal (2) communicating with said communication terminal, said internet browser including a plug-in forwarding an authentication request sent by the service server to said communication terminal (1).

5. User authentication method according to any one of the preceding claims, wherein the execution of the dedicated authentication means includes at least one authentication process including requesting the user to input a password, and/or proceeding to a biometric authentication and/or determining the location of said communication terminal.

6. User communication terminal (1), **characterized in that** it includes a trusted execution environment (100) having dedicated user authentication means (101), said trusted execution environment storing an authentication policy (103) associated to at least an online service and storing user authentication credentials (104) for accessing said online service, the trusted execution environment being programmed for retrieving the authentication policy associated to said service and for executing its dedicated authentication means based on the retrieved authentication policy, the trusted execution environment being also programmed to output said user authentication credentials when the dedicated authentication means have performed a successful authentication.
